# EUROPEAN PATENT APPLICATION

(11) **EP 0 560 520 A1**
(43) Date of publication of application: **15.09.1993**
(21) Application number: 93301527.3
(22) Date of filing: 01.03.1993
(51) Int. Cl.: G01D 5/34

(54) **Optical position encoder**

(30) Priority: 13.03.1992 GB 9205575
(71) Applicant: LUCAS INDUSTRIES PUBLIC LIMITED COMPANY, Solihull, West Midlands B91 3TX (GB)
(72) Inventor: Pinnock, Robert Andrew, Bournville, Birmingham B30 2DN (GB)
(74) Representative: Gibson, Stewart Harry

(57) **Abstract**

An optical position encoder comprises an encoded device (10) for mounting to an element the position of which is to be monitored. The encoded device (10) comprises a plurality of parallel tracks (11,12,13) each consisting of a plurality of coloured squares. An optical sensing head (21,22,23) extends transverse to the tracks (11, 12, 13) and provides an output representative of the colour being sensed on each respective track (11,12,13). The outputs are connected to a decoder (50) comprising a look-up table so that the position of the element can be determined according to the combination of colours being sensed.

## Description

This invention relates to a position encoder useful for monitoring linear or rotary movement for example, and more particularly to a position encoder of optical form. The invention also relates to an optical head for the encoder, and to an encoded device forthe encoder.

Optical position encoders of various forms are known. Typically these require a large number of optical fibres for addressing a corresponding number of coded tracks (one for each bit of resolution), or instead they require some form of multiplexing (either time-division or wavelength-division) and this increases the complexity of the sensor head and the susceptibility to environmental changes.

It is an object of this invention to provide an optical position encoder which overcomes the problems noted above of the known optical position encoders.

In accordance with this invention, there is provided an optical position encoder, comprising a plurality of tracks carried or for carrying by an element the position of which is to be monitored, means for directing light at the respective tracks, and a plurality of sensors, one for each track, arranged to receive light reflected from or transmitted through the respective tracks, the tracks comprising successive incremental regions of selected colours and each track including regions of a plurality of different colours.

Preferably the number of different colours corresponds to the number of different tracks and each track includes regions of all said selected colours.

As the element to be monitored moves relative to the sensors, the combination of different colours presented to the set of sensors will change incrementally. However, for a device having n tracks and n different colours, the total number of different combinations is nn: e.g. for three tracks and three colours it is 3³ or 27.

Each sensor provides an output the level of which represents the colour of the track region from which, at that instant, it has received its light. Thus each sensor has a characteristic such that its output varies with the wavelength of light incident upon it.

The outputs from the set of light sensors can be applied to a decoder (e.g. comprising a look-up table) which determines the position of the movable element relative to the sensors.

Also in accordance with this invention, there is provided an optical head for an optical position encoder, the head being arranged to co-operate with a plurality of encoded tracks carried by an element the position of which is to be monitored, and the head comprising means for directing light at the respective tracks and a plurality of sensors arranged to receive light reflected from or transmitted through the respective tracks, each sensor being arranged to provide an output dependent upon the wavelength of light incident thereon.

Further in accordance with this invention, there is provided an encoded device for an optical position encoder, said encoded device being carried by or arranged for carrying by an element the position of which is to be monitored, and the encoded device comprising a plurality of tracks which comprise successive incremental regions of selected colours, each track including regions of a plurality of different colours.

Embodiments of this invention will now be described by way of examples only and with reference to the accompanying drawings, in which:
Figure 1 is a schematic view of an optical position encoder in accordance with this invention;
Figure 2 is an enlarged view of the coloured tracks of the encoder of Figure 1; and
Figure 3 is a schematic view of an alternative embodiment of optical position encoder.

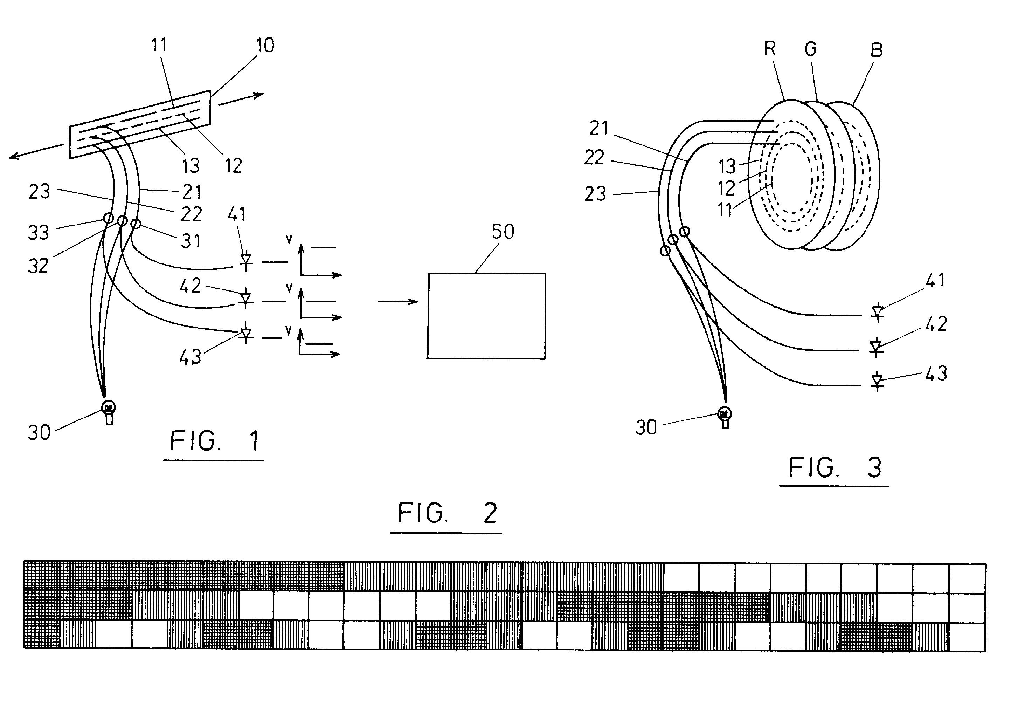

Referring to Figure 1, an optical position encoder comprises an series of parallel tracks 11, 12, 13 carried by an element 10, the position of which is to be monitored. In the example shown, the movement of element 10 which is to be monitored is linear and the tracks 11, 12, 13 are linear tracks extending parallel to the direction of movement. The example of optical position encoder which is shown has three tracks 11, 12, 13 but in general any number of such tracks may be provided. The optical position encoder further comprises a corresponding number of optical fibres 21, 22, 23 having their ends directed at respective ones of the tracks 11,12,13. Broadband orwhite light from a source 30 is passed along the optical fibres 21, 22, 23 and reflected back from the respective tracks 11, 12, 13. The reflected light is separated from the optical fibres 21, 22, 23 at Y-couplers 31, 32, 33 and passed to respective light sensors 41, 42, 43.

Figure 2 shows the series of parallel tracks 11, 12, 13 in more detail. In this case there are three tracks: each track consists of successive regions or squares of three different colours, for example red, green and blue. Each transverse set of three squares consists of a unique combination of colours: between any two adjacent transverse sets, there is a colour change in only one of the tracks.

The outputs of each of the sensors 41, 42, 43 will depend upon the colour of the square from which, at that instant, its received light has been reflected. Each of the sensors has a characteristic such that its output voltage varies with the wavelength of light incident upon it, and is relatively insensitive to variations in light intensity (at least over a range of light intensities). Each sensor may comprise a device manufactured by Sharp under the designation PD 150 or PD 151. In the case of three tracks as shown, each sensor has three possible output levels. The outputs of the three sensors uniquely define the position of the element 10 relative to the sensing head (which is formed by the ends of the three optical fibres directed at the encoded tracks). The outputs of the three sensors 41, 42, 43 are passed to a decoding means 50 (e.g. comprising a look-up table) to determine the position of the element 10.

The differently coloured squares or regions of the encoded tracks may be formed by a thin-film deposition technique.

Figures 1 and 2 show a position encoder for linear movement, but the same principles are applicable to a position encoderfor rotary movement, in which case the coloured tracks are annular.

Figure 3 shows an alternative arrangement employed in a rotary position encoder, although equally applicable to a linear position encoder. Again, for a three-channel system there are three tracks (in this case annular) but they are formed by three differently coloured discs (e.g. red, green and blue) rotating together and formed with apertures or transparent regions so that, for different incremental rotary positions of the disc, light is reflected from the required colour into each of the optical fibres. This arrangement has the advantage that it is not necessary to print or otherwise form a pattern of different colours on a substrate, but instead the colours of the individual discs are used.

The encoders which have been described, relying on colour detection, render the sensors insensitive to in-line transmission changes in the addressing fibres, which would present problems if varying levels of "grey" were used rather than different colours. The number of addressing fibres, for given resolution, is reduced: for example a five channel device would give 5⁵ or 3125 unique combinations, equivalent to an 11 or 12 bit binary encoder. Also, the sensor head is simple optically and passive electrically.

## Claims

1) An optical position encoder comprising a plurality of tracks carried or for carrying by an element the position of which is to be monitored, means for directing light at the respective tracks, and a plurality of sensors, one for each track, arranged to receive light reflected from or transmitted through the respective tracks, the tracks comprising successive incremental regions of selected colours and each track including regions of a plurality of different colours.

2) An optical position encoder as claimed in claim 1, in which the number of different colours corresponds to the number of different tracks and each track includes regions of all the selected colours.

3) An optical sensor as claimed in claims 1 or 2, in which outputs from the sensors are applied to a decoder which determines the position of the element.

4) An optical head for an optical position encoder, the head being arranged to co-operate with a plurality of encoded tracks carried by an element the position of which is to be monitored, and the head comprising means for directing light at the respective tracks and a plurality of sensors arranged to receive light reflected from or transmitted through the respective tracks, each sensor being arranged to provide an output dependent upon the wavelength of light incident thereon.

5) An encoded device for an optical position encoder, said encoded device being carried by or arranged for carrying by an element the position of which is to be monitored, and the encoder device comprising a plurality of tracks which comprise successive incremental regions of selected colours, each track including regions of a plurality of different colours.

6) An encoded device as claimed in claim 5, in which the respective successive incremental regions of each track are arranged in sets which extend transverse to said tracks.

7) A encoded device as claimed in claim 6, in which the combination of coloured regions in each said transverse set is unique.

8) An encoded device as claimed in claim 6 or 7, in which the combination of coloured regions in successive transverse sets varies by a colour-change in only one of the tracks.
